# EUROPEAN PATENT SPECIFICATION

(11) **EP 4 023 514 B1**
(45) Date of publication and mention of the grant of the patent: **24.12.2025**
(21) Application number: 20864752.9
(22) Date of filing: 30.07.2020
(51) Int. Cl.: B60W 20/10, B60W 20/11, B60W 30/188, B60W 10/06, B60W 10/08, B60K 6/48

(54) **METHOD FOR CONTROLLING TORQUE OF ENGINE AND CONTROL APPARATUS**
VERFAHREN ZUM STEUERN DES DREHMOMENTS EINES MOTORS UND STEUERGERÄT
PROCÉDÉ DE COMMANDE DU COUPLE D'UN MOTEUR ET APPAREIL DE COMMANDE

(30) Priority: 20.09.2019 CN 201910894495
(43) Date of publication of application: 06.07.2022
(73) Proprietor: Great Wall Motor Company Limited, Baoding, Hebei 071000 (CN)
(72) Inventor: QIAN, Chao, Baoding, Hebei 071000 (CN); ZHANG, Nan, Baoding, Hebei 071000 (CN); LI, Lei, Baoding, Hebei 071000 (CN); LIU, Bao, Baoding, Hebei 071000 (CN); SONG, Dandan, Baoding, Hebei 071000 (CN); SUN, Zhaolue, Baoding, Hebei 071000 (CN); SONG, Haijun, Baoding, Hebei 071000 (CN)
(74) Representative: dompatent
(86) International application number: PCT/CN2020/105683
(87) International publication number: WO 2021/052023

(56) References cited:
- CN-A- 101 219 665
- CN-A- 101 602 362
- CN-A- 103 359 108
- CN-A- 103 660 913
- CN-A- 103 660 913
- CN-A- 104 002 802
- CN-A- 108 162 952
- DE-A1- 102008 035 451
- US-A1- 2018 162 352
- US-B2- 9 002 551

## Description

### Cross Reference to Related Applications

### Technical Field

The present invention relates to the technical field of hybrid vehicles, in particular to a method for controlling a torque of an engine of a hybrid vehicle and a control apparatus.

### Background Art

With increasing depletion of global oil resources and increasingly severe environmental problems, energy conservation and emission reduction have become the development mainstream of the automobile industry. As a novel automobile product, hybrid vehicles can achieve the effect of reducing fuel consumption and emissions, and will not bring worry in mileages of electric vehicles. Therefore, for a long time to come, the hybrid vehicles will become the focus of the development of automobile industry.

On the one hand, energy saving and emission reduction of hybrid vehicles are realized by pure electric driving. On the other hand, a working point of an engine is adjusted through a motor to keep the engine running in an economic range. Therefore, how to control the engine to work in the economic range is a key and difficult point in development of a control strategy for the hybrid vehicles.

Generally speaking, working points of engines of the existing hybrid vehicles are adjusted on the basis of BSFC curves of engines (curves of optimum fuel consumption rates of the engines). According to the engine rotational speed and torque, a region with a low fuel consumption rate is selected as an engine working range. If the engine doesn't work in this region, the engine torque can be adjusted through the power generation and assistance of the motor, such that the engine can work in the economic range, and purposes of reducing emissions and fuel consumption can be achieved.

The economic working range of the engine defined by the adjustment control strategy of the engine working point is abstract, the area is small, and the adjustment ability of the engine working point is limited, such that control is not precise enough.

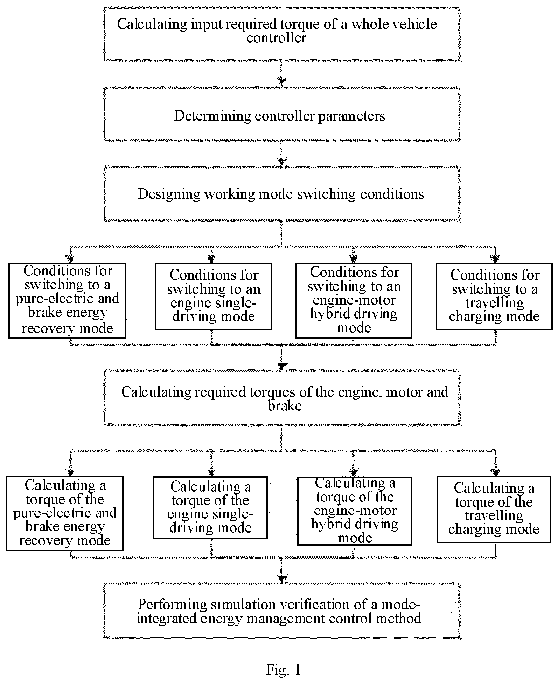

In order to improve fuel economy and optimize the working range of the engine, related institutions have made further research on the aspect. Fig. 1 shows a flow chart of a method for controlling a torque of an engine of a hybrid vehicle provided in the prior art. A method of realizing mode integration optimization energy control for a plug-in hybrid vehicle is disclosed. According to input required torque of a whole vehicle controller, vehicle attributes and real-time vehicle attributes, output parameters of the whole vehicle controller and switching conditions among various working modes are determined, and then the required torques of the engine, a motor and a brake in various working modes are calculated, so as to formulate optimized torque distribution rules and realize fuel economy optimization of the whole vehicle of the plug-in hybrid vehicle. The vehicle attributes comprise: a battery SOC target value, a battery SOC minimum value, a motor peak torque, an engine external characteristic torque and a motor maximum generating torque. As found by the inventor, there are many input parameters and complicated calculation in the control method, and the economic working range of the engine defined by the adjustment control strategy of the engine working point is still relatively abstract and the control is not precise enough.

Therefore, there is an urgent need for a torque control solution in the field, which can make the engine working point of the hybrid vehicle have a wider adjustment range, realize more precise control and realize a wide suitable range, and the solution can be applied to control of hybrid vehicles having various structures.

The content in the background art is merely the technology known to the inventor and may not necessarily represent the prior art in this field.

CN 103 660 913 A shows relevant background art for the present invention.

### Summary of the Invention

The present invention is defined in claims 1 and 5.

### Brief Description of the Drawings

Drawings which constitute a part of the present disclosure, are used to provide further understanding of the present invention. Exemplary embodiments of the present disclosure and the descriptions are used to explain the present invention, and not intended to improperly limit the present invention. In the drawings:
Fig. 1 shows a flow chart of a method for controlling a torque of an engine of a hybrid vehicle provided by the prior art;
Fig. 2 shows a flow chart of a method for controlling a torque of an engine of a hybrid vehicle provided by an example not falling within the subject-matter for which protection is sought;
Fig. 3 shows a schematic diagram of a working range of an engine of a hybrid vehicle provided by an example not falling within the subject-matter for which protection is sought;
Fig. 4 shows a flow chart of a method for controlling a torque of an engine of a hybrid vehicle provided by an embodiment of the present invention;
Fig. 5 shows a schematic diagram of a working range of an engine of a hybrid vehicle provided by
   an embodiment of the present invention;
Fig. 6 shows a schematic structural diagram of a torque control apparatus of an engine of a hybrid vehicle provided by an example not falling within the subject-matter for which protection is sought; and
Fig. 7 shows a schematic structural diagram of a torque control apparatus of an engine of a hybrid vehicle provided by an embodiment of the present invention.

List of reference numerals:
100 engine working range determination module: 200 motor working mode determination module, 300 motor control module; 110 first working range determination module; 120 second working range determination module; 130 third working range determination module; 140 fourth working range determination module; 210 efficient charging mode determination module; 220 conventional charging mode determination module; 230 alternative assisting mode determination module; 240 additional assisting mode determination module; 310 efficient charging control module; 320 conventional charging control module; 330 alternative assisting control module; and 340 additional assisting control module.

### Detailed Description of the Invention

Certain exemplary embodiments are only simply described hereinafter. As those skilled in the art appreciate, the described embodiments may be modified in various different ways, without departing from the scope of the present invention as defined by the appended claims.

Therefore, the drawings and description are regarded as illustrative in nature and not restrictive.

In the description of the present disclosure, it should be understood that the terms "first" and "second" are used only for description and shall not be interpreted as an indication or implication of relative importance or an implicit indication of the number of technical features. Thus, features defined with "first", "second" may include at least one or more such features, either explicitly or implicitly. In the description of the present disclosure, "a plurality of" means two or more, unless otherwise specifically defined.

The following disclosure provides examples or embodiments for implementing different structures of the present invention. In order to simplify the present invention, components and arrangements of specific examples are described below. Of course, they are only examples and are not intended to limit the present invention. In addition, the present disclosure may repeat reference numerals and/or reference letters in different examples, and such repetition is for the sake of simplicity and clarity, and itself does not indicate the relationship between the various implementations and/or settings discussed.

The preferred embodiments of the present disclosure are described in combination with the drawings below. It should be understood that the preferred embodiments described here are used for illustrating and explaining the present invention merely, but not used for limiting the present invention.

A hybrid vehicle refers to a vehicle of which a driving system is composed of two or more single driving systems that can operate at the same time, and driving power of the vehicle is provided by the single driving system alone or jointly according to an actual driving state of the vehicle. That is, traditional engines (diesel engines or gasoline engines) and electric motors are used as power sources, and some engines are modified to use other alternative fuels, such as compressed natural gas, propane and ethanol fuels.

### Example 1

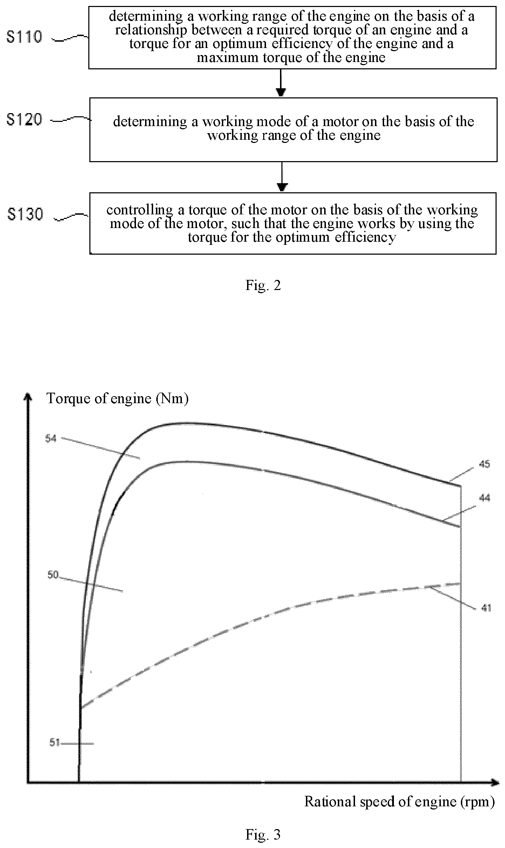

Fig. 2 shows a flow chart of a method for controlling a torque of an engine of a hybrid vehicle provided by an example not falling within the subject-matter for which protection is sought, which comprises the following steps.

In step S110, a working range of the engine is determined on the basis of a relationship between a required torque of the engine of a hybrid vehicle and a preset parameter, wherein the preset parameter comprises a torque for an optimum efficiency of the engine and a maximum torque of the engine.

Fig. 3 shows a schematic diagram of a working range of an engine of a hybrid vehicle provided by an example not falling within the subject-matter for which protection is sought, and specifically shows changes of different preset parameters at different rotational speeds.

As shown in Fig. 3, curve 41 is an optimum efficiency curve of the engine, the abscissa is the engine rotational speed (rpm), and the ordinate is the torque for the optimum efficiency of the engine at each rotational speed.

According to output of an accelerator pedal of an automobile, a torque that needs to be output by the engine is determined to maintain power output. The torque that needs to be output is the required torque of the engine.

When the required torque of the engine is less than the torque for the optimum efficiency of the engine, it is determined that the engine works in a first working range, and the torque for the optimum efficiency of the engine is provided by the optimum efficiency curve of the engine. As shown in Fig. 3, range 51 is the first working range.

In the first working range, the required torque of the engine is less than the torque for the optimum efficiency of the engine. That is to say, a load demand of the engine is small, so it is necessary to increase a load of the engine, such that the engine can achieve the torque for the optimum efficiency and work in an economic range.

When the required torque of the engine is larger than the torque for the optimum efficiency of the engine and less than the maximum torque of the engine, it is determined that the engine works in a middle working range.

Curve 44 is a maximum torque curve of the engine, the abscissa is the engine rotational speed, and the ordinate is the maximum torque of the engine at each rotational speed. As shown in Fig. 3, range 50 between curve 41 and curve 44 is the middle working range.

In the middle working range, the required torque of the engine is larger than the torque for the optimum efficiency of the engine and less than the maximum torque of the engine. That is to say, a load demand of the engine is large, but it does not exceed a limit value, such that a motor is needed to share the load to reduce the engine load, such that the engine can achieve the torque for the optimum efficiency and work in the economic range.

Curve 45 is a maximum torque curve of the whole vehicle, the abscissa is the engine rotational speed, and the ordinate is the sum of the maximum torque of the engine and the maximum torque of the motor at each rotational speed.

When the required torque of the engine is larger than the maximum torque of the engine, it is determined that the engine works in a fourth working range, and the maximum torque of the engine is provided by a maximum torque curve. As shown in Fig. 3, range 54 between curve 44 and curve 45 is the fourth working range.

In the fourth working range, the load of the engine has exceeded a capacity of the engine, and the motor is required to share the load to compensate for power that the engine cannot provide.

In step S120, a working mode of a motor is determined on the basis of the working range of the engine.

According to some examples, motor working modes, including an efficient charging mode, an alternative assisting mode and an additional assisting mode, corresponding to the different working ranges of the engine are set in advance.

If the engine works in the first working range, it is determined that the motor works in the efficient charging mode. If the engine works in a second working range, it is determined that the motor works in a conventional charging mode. If the engine works in a third working range, it is determined that the motor works in the alternative assisting mode. If the engine works in the fourth working range, it is determined that the motor works in the additional assisting mode.

In the first working range of the engine, the load demand of the engine is small, and the engine does not work in the economic range, so it is determined that the motor works in the efficient charging mode. The engine drives the motor to charge a high-voltage battery, which increases the engine load and makes the engine work in the economic range.

In the middle working range of the engine, the engine load is large, but does not exceed the limit value thereof, and the engine does not work in the economic range, so it is determined that the motor works in the alternative assisting mode. With assistance of the motor, the engine load is reduced, such that the engine work in the economic range.

In the fourth working range of the engine, the engine load has exceeded the engine capacity, so it is determined that the motor works in the additional assisting mode. The power that the engine cannot provide is compensated by motor.

In step S130, a torque of the motor is controlled on the basis of the working mode of the motor. On the basis of the working mode of the motor, the torque of the motor is controlled, such that the engine works by using the torque for the optimum efficiency.

The motor works in the efficient charging mode, and the engine drives the motor to generate power. A power generation torque of the motor is controlled to be equal to the required torque of the engine minus the torque for the optimum efficiency of the engine at a current rotational speed. When the motor torque is positive, it means that the motor is in an assisting state; and when the motor torque is negative, it means that the motor is in a power-generating state.

The motor works in the alternative assisting mode, and the motor is used to assist the engine in driving, and an assisting torque of the motor is controlled to be equal to the required torque of the engine minus the torque for the optimum efficiency of the engine at the current rotational speed. The motor works in the additional assisting mode, and the motor is used to assist the engine in driving, and the torque of the motor is controlled to be equal to the required torque of the whole vehicle minus the maximum torque of the engine.

According to the technical solution provided by the disclosed example, the working range of the engine is defined according to the relationship between the required torque of the engine and other characteristic torques of the engine, and the different motor working modes are defined accordingly, such that the engine works by using the torque for the optimum efficiency through the different working modes of the motor, the engine efficiency can be improved, fuel consumption can be reduced, an adjustment range of a working point of the engine of the hybrid vehicle is wider and control is more precise.

### Embodiment 1

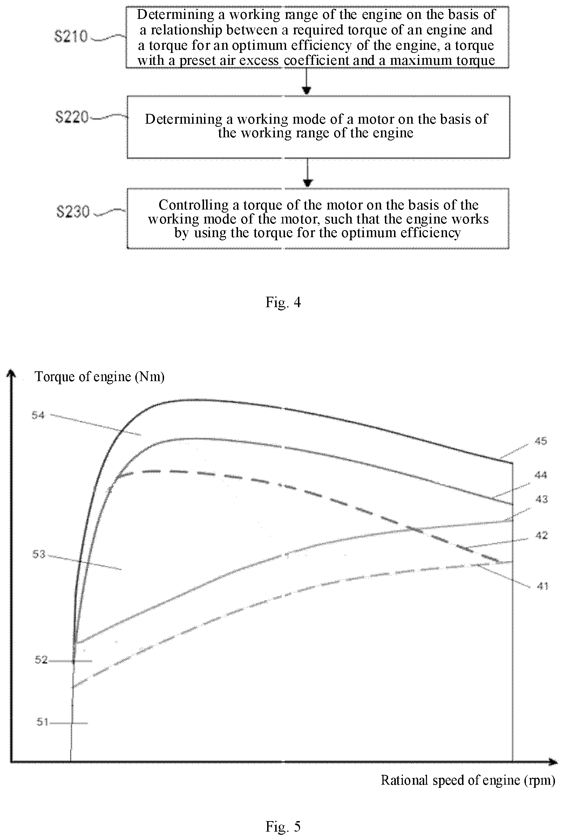

Fig. 4 shows a flow chart of a method for controlling a torque of an engine of a hybrid vehicle provided by an embodiment of the present invention, which comprises the following steps.

In step S210, on the basis of a relationship between a required torque of an engine of a hybrid vehicle and a preset parameter, a working range of the engine is determined, wherein the preset parameter comprises a torque for an optimum efficiency of the engine, an engine torque with an air excess coefficient as a preset value and a maximum torque of the engine.

The engine torque with the air excess coefficient as the preset value may be replaced by other characteristic torques of the engine, which is not limited here.

Fig. 5 shows a schematic diagram of a working range of an engine of a hybrid vehicle provided by an embodiment of the present invention, and specifically shows changes of different preset parameters at different rotational speeds.

As shown in Fig. 5, curve 41 is an optimum efficiency curve of the engine, the abscissa is the engine rotational speed (rpm), and the ordinate is the torque for the optimum efficiency of the engine at each rotational speed.

According to output of an automobile accelerator pedal, a torque that the engine needs to output is determined to maintain power output. The torque that the engine needs to output is the required torque of the engine.

When the required torque of the engine is less than the torque for the optimum efficiency of the engine, it is determined that the engine works in a first working range, and the torque for the optimum efficiency of the engine is provided by the optimum efficiency curve of the engine. As shown in Fig. 5, range 51 is the first working range.

In the first working range, the required torque of the engine is less than the torque for the optimum efficiency of the engine. That is to say, a load demand of the engine is small, so it is necessary to increase a load of the engine, such that the engine can achieve the torque for the optimum efficiency and work in an economic range.

Curve 43 is an optimum efficiency compensation curve of the engine, the abscissa is the engine rotational speed, and the ordinate is the sum of the torque for the optimum efficiency of the engine and a compensation value at each rotational speed.

When the required torque of the engine is larger than the torque for the optimum efficiency of the engine and less than a relatively small torque value, it is determined that the engine works in a second working range. The relatively small torque value is a relatively small value of two values, one of which is the engine torque with the air excess coefficient as the preset value, and the other is a relatively small value of the sum of the torque for the optimum efficiency of the engine and the compensation value, and the air excess coefficient is provided by a curve of an air excess coefficient. As shown in Fig. 5, range 52 is the second working range. The compensation value is a preset value, which is determined according to a torque that the whole vehicle needs to consume. Curve 42 is a λ curve, that is, the curve of the air excess coefficient. The air excess coefficient is also called an air surplus coefficient. In order to make fuel tend to burn completely, it is actually necessary to supply more air than a theoretical value. The excess part is called excess air. The ratio of actual air consumption to theoretical air consumption is called the air excess coefficient. The abscissa is the engine rotational speed, and the ordinate is the engine torque at each rotational speed when the air excess coefficient λ is the preset value.

Optionally, the engine torque with the air excess coefficient as the preset value is selected as the engine torque with the air excess coefficient of 1, which is not limited here.

As shown in Fig. 5, in an area above the λ curve when the air excess coefficient λ=1, a gas mixture in the engine enters an enrichment zone, and fuel consumption and emissions will become relatively serious.

In the second working range, the required torque of the engine is larger than the torque for the optimum efficiency of the engine and less than the relatively small torque value. The relatively small torque value is a relatively small value of two values, one of which is the engine torque with an air excess coefficient of 1, and the other is a relatively small value of the sum of the torque for the optimum efficiency of the engine and the compensation value. That is to say, the engine itself works in the economic range, and the engine drives the motor to charge a high-voltage battery to meet consumption of high-voltage accessories, such that a load demand of the engine is slightly larger than the torque for the optimum efficiency of the engine.

When the required torque of the engine is larger than the relatively small torque value and less than the maximum torque of the engine, it is determined that the engine works in a third working range. The relatively small torque value is a relatively small value of the engine torque with the air excess coefficient of 1 and the sum of the torque for the optimum efficiency of the engine and the compensation value. The air excess coefficient is provided by the curve of the air excess coefficient.

Curve 44 is a maximum torque curve of the engine, the abscissa is the engine rotational speed, and the ordinate is the maximum torque of the engine at each rotational speed. As shown in Fig. 5, range 53 between the relatively small values of curve 42 and curve 43 and curve 44 is the third working range.

In the middle working range, the required torque of the engine is larger than the torque for the optimum efficiency of the engine and less than the maximum torque of the engine. That is to say, the load demand of the engine is large, but does not exceed a limit value, so the motor is needed to share the load and reduce the engine load, such that the engine can achieve the torque for the optimum efficiency and work in the economic range.

Curve 45 is a maximum torque curve of the whole vehicle, the abscissa is the engine rotational speed, and the ordinate is the sum of the maximum torque of the engine and the maximum torque of the motor at each rotational speed.

When the required torque of the engine is larger than the maximum torque of the engine, it is determined that the engine works in a fourth working range, and the maximum torque of the engine is provided by the maximum torque curve. As shown in Fig. 5, range 54 between curve 44 and curve 45 is the fourth working range.

In the fourth working range, the engine load has exceeded the engine capacity, and the motor is required to share the load to compensate for the power that the engine cannot provide.

In step S220, a working mode of the motor is determined on the basis of the working range of the engine.

According to some embodiments, working modes of the motor, including an efficient charging mode, a conventional charging mode, an alternative assisting mode and an additional assisting mode, corresponding to the different working ranges of the engine are set in advance.

If the engine works in the first working range, it is determined that the motor works in the efficient charging mode. If the engine works in the second working range, it is determined that the motor works in the conventional charging mode. If the engine works in the third working range, it is determined that the motor works in the alternative assisting mode. If the engine works in the fourth working range, it is determined that the motor works in the additional assisting mode. In the first working range of the engine, the load demand of the engine is small, and the engine does not work in the economic range, so it is determined that the motor works in the efficient charging mode. The engine drives the motor to charge a high-voltage battery, which increases the engine load and makes the engine work in the economic range.

In the second working range of the engine, the engine itself works in the economic range, and it is determined that the motor works in the conventional charging mode. The engine drives the motor to charge the high-voltage battery to meet consumption of high-voltage accessories.

In the third working range of the engine, the engine load is large, but does not exceed a limit value thereof, and the engine does not work in the economic range, so it is determined that the motor works in the alternative assisting mode. With assistance of the motor, the engine load is reduced, such that the engine can work in the economic range.

In the fourth working range of the engine, the engine load has exceeded the engine capacity, so it is determined that the motor works in the additional assisting mode. Power that the engine cannot provide is compensated by motor.

In step S230, on the basis of the working mode of the motor, a torque of the motor is controlled. On the basis of the working mode of the motor, the torque of the motor is controlled, such that the engine works with the torque for the optimum efficiency.

The motor works in the efficient charging mode, and the engine drives the motor to generate power. A power generation torque of the motor is controlled to be equal to the required torque of the engine minus the torque for the optimum efficiency of the engine at a current rotational speed. When the motor torque is positive, it means that the motor is in an assisting state; and when the motor torque is negative, it means that the motor is in the power-generating state. In the efficient charging mode, the engine works in the economic range with the torque for the optimum efficiency, and the power generation torque of the motor provides the part where the required torque of the engine is larger than the torque for the optimum efficiency of the engine.

The motor works in the conventional charging mode, the motor is driven by the engine to generate power, and the power generation torque of the motor is controlled to be equal to the torque required by the high-voltage accessories of the whole vehicle. In the conventional charging mode, the engine works in the economic range with the torque for the optimum efficiency, and the power generation torque of the motor provides the torque required for the consumption of the high-voltage accessories of the whole vehicle.

The motor works in the alternative assisting mode, the high-voltage battery supplies power to the motor, the motor assists the engine in driving, and an assisting torque of the motor is controlled to be equal to the required torque of the engine minus the torque for the optimum efficiency of the engine at the current rotational speed. In the alternative assisting mode, the engine works in the economic range with the torque for the optimum efficiency, and the assisting torque of the motor provides the part where the required torque of the engine is larger than the torque for the optimum efficiency of the engine.

The motor works in the additional assisting mode, and the high-voltage battery supplies power to the motor, the motor assists the engine in driving, and the motor torque is controlled to be equal to the required torque of the whole vehicle minus the maximum torque of the engine. In the additional assisting mode, the engine works at the maximum torque, and the assisting torque of the motor provides the part where the required torque of the engine is larger than the maximum torque of the engine.

According to the technical solution provided by the embodiment of the present invention, the relationship between the required torque of the engine and the curve of the air excess coefficient is increased, the middle working range of the engine is further subdivided, and the alternative assisting mode of the motor is subdivided into the conventional charging mode and the alternative assisting mode, such that the engine works at the torque for the optimum efficiency as much as possible, the control strategy is finer, the engine efficiency is higher, and the fuel consumption is lower. In this way, an adjustment range of a working point of the engine of the hybrid vehicle is wider, control is more precise, and an suitable range is wide. The technical solution can be applied to control of hybrid vehicles having various structures.

It should be noted that, for the sake of simple description, the aforementioned method embodiment is expressed as a series of action combinations, but those skilled in the art should know that the present application is not limited by the described action sequence, because according to the present application, some steps can be performed in other sequences or simultaneously.

The method can be applied to an electronic apparatus, which comprises a memory, a processor and a computer program stored in the memory and running on the processor. When the program is executed by the processor, the processor is made to perform the method described above.

### Example 2

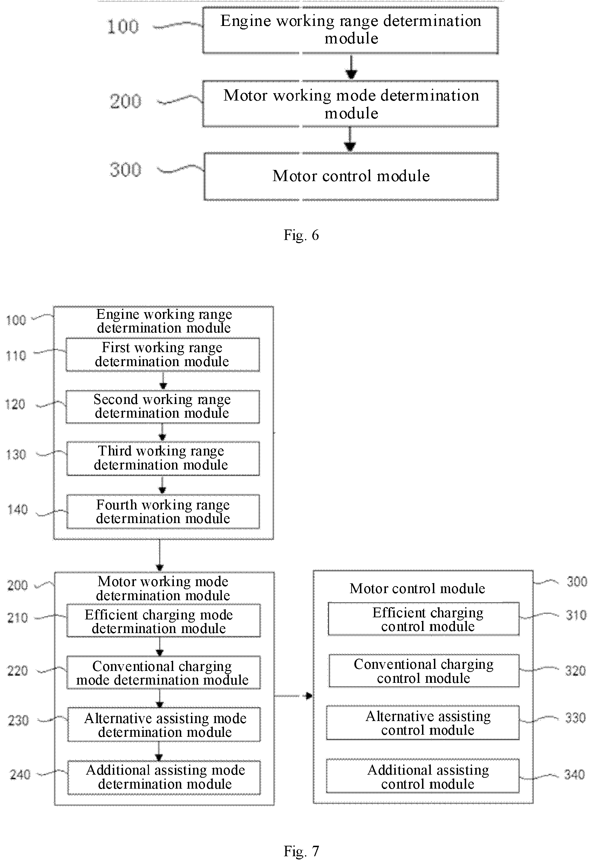

Fig. 6 shows a schematic structural diagram of a torque control apparatus of an engine of a hybrid vehicle provided by an example not falling within the subject-matter for which protection is sought, which comprises an engine working range determination module 100, a motor working mode determination module 200 and a motor control module 300.

The engine working range determination module 100 determines a working range of the engine on the basis of a relationship between a required torque of the engine of the hybrid vehicle and a preset parameter which comprises a torque for an optimum efficiency of the engine and a maximum torque of the engine. The motor working mode determination module 200 determines a working mode of a motor on the basis of the working range of the engine. The motor control module 300 controls a torque of the motor on the basis of the working mode of the motor, such that the engine works by using the torque for the optimum efficiency.

According to the technical solution provided by this example, an adjustment range of a working point of the engine of the hybrid vehicle is wider, control is more precise, and a suitable range is wide. The technical solution can be applied to control of hybrid vehicles having various structures.

Fig. 7 shows a schematic structural diagram of a torque control apparatus of an engine of a hybrid vehicle provided by an embodiment of the present invention, which comprises an engine working range determination module 100, a motor working mode determination module 200 and a motor control module 300.

The engine working range determination module 100 determines a working range of the engine on the basis of a relationship between a required torque of the engine the hybrid vehicle and a preset parameter which comprise a torque for an optimum efficiency of the engine, an engine torque with an air excess coefficient as a preset value and a maximum torque of the engine. The motor working mode determination module 200 determines a working mode of a motor on the basis of the working range of the engine. The motor control module 300 controls a torque of the motor on the basis of the working mode of the motor, such that the engine works by using the torque for the optimum efficiency.

Optionally, the engine torque with the air excess coefficient as the preset value is selected as an engine torque with the air excess coefficient of 1, which is not limited here.

The engine working range determination module 100 comprises a first working range determination module 110, a middle working range determination module and a fourth working range determination module 140.

The first working range determination module 110 determines that the engine works in the first working range in response to that the required torque of the engine is less than the torque for the optimum efficiency of the engine, and the torque for the optimum efficiency of the engine is provided by an optimum efficiency curve of the engine.

The middle working range determination module determines that the engine works in the middle working range in response to that the required torque of the engine is larger than the torque for the optimum efficiency of the engine and less than the maximum torque of the engine, wherein the maximum torque of the engine is provided by a maximum torque curve of the engine. The middle working range comprises a second working range and a third working range. Accordingly, the middle working range determination module comprises a second working range determination module 120 and a third working range determination module 130.

The second working range determination module 120 determines that the engine works in the second working range in response to that the required torque of the engine is larger than the torque for the optimum efficiency of the engine and less than a relatively small torque value. The relatively small torque value is a relatively small value of the engine torque with an air excess coefficient of 1 and the sum of the torque for the optimum efficiency of the engine and a compensation value, and the air excess coefficient is provided by a curve of the air excess coefficient.

The third working range determination module 130 determines that the engine works in the third working range in response to that the required torque of the engine is larger than a torque minimum value and less than the maximum torque of the engine, wherein the torque minimum value is a relatively small value of the engine torque with the air excess coefficient of 1 and the sum of the torque for the optimum efficiency of the engine and the compensation value, and the air excess coefficient is provided by the curve of the air excess coefficient of the engine.

The fourth working range determination module 140 determines that the engine works in the fourth working range in response to that the required torque of the engine is larger than the maximum torque of the engine, and the maximum torque of the engine is provided by a maximum torque curve of the engine.

The motor working mode determination module 200 comprises an efficient charging mode determination module 210, a conventional charging mode determination module 220, an alternative assisting mode determination module 230 and an additional assisting mode determination module 240.

The efficient charging mode determination module 210 determines that the motor works in the efficient charging mode in response to the engine working in the first working range. The conventional charging mode determination module 220 determines that the motor works in the conventional charging mode in response to the engine working in the second working range. The alternative assisting mode determination module 230 determines that the motor works in the alternative assisting mode in response to the engine working in the third working range. The additional assisting mode determination module 240 determines that the motor works in the additional assisting mode in response to the engine working in the fourth working range.

The motor control module 300 comprises an efficient charging control module 310, a conventional charging control module 320, an alternative assisting control module 330 and an additional assisting control module 340.

In response to the motor working in the efficient charging mode, the efficient charging control module 310 drives the motor to generate power to charge a battery through the engine, and controls a power generation torque of the motor to be equal to the required torque of the engine minus the torque for the optimum efficiency of the engine at a current rotational speed. In response to the motor working in the conventional charging mode, the conventional charging control module 320 drives the motor to generate power through the engine, and controls the power generation torque of the motor to be equal to the torque required by consumption of high-voltage accessories of the whole vehicle. In response to the motor working in the alternative assisting mode, the alternative assisting control module 330 assists the engine in driving through the motor, and controls the assisting torque of the motor to be equal to the required torque of the engine minus the torque for the optimum efficiency of the engine at the current rotational speed. In response to the motor working in the additional assisting mode, the additional assisting control module 340 assists the engine in driving through the motor, and controls the motor torque to be equal to the required torque of the whole vehicle minus the maximum torque of the engine. According to the technical solution provided by the embodiment, the engine of the hybrid vehicle works in a high-efficiency area through motor charging and power assistance, such that economy and power performance are improved, an adjustment range of a working point of the engine is wider, control is more precise, and a suitable range is wide. The technical solution can be applied to control of hybrid vehicles having various structures.

It should be understood that the above embodiments of the apparatus are only illustrative, and the apparatus of the present application can also be realized in other ways. For example, division of units/modules described in the above embodiments is only a logical function division, and there may be another division mode in actual implementation. For example, multiple units, modules or components can be combined or integrated into another system.

The integrated unit/module can be stored in a computer readable memory if it is implemented in the form of a software program module and sold or used as an independent product. On the basis of such understanding, the technical solution of the present application essentially, or the parts having contributions to the prior art or all or part of the technical solution may be embodied in the form of software products. Such computer software product is stored in a memory and comprises several instructions to make a computer device (such as a personal computer, a server or a network apparatus, etc.) perform all or part of the steps of the method described in each embodiment of the present application. The aforementioned memory comprises: a U disk, a Read-Only Memory (ROM), a Random Access Memory (RAM), a removable hard disk, a magnetic disk or an optical disk, etc., which can store program codes.

The above description only involves the preferred embodiments of the present invention, which are not intended to limit the present invention.

Finally, it should be noted that, the above are only preferred embodiments of the present invention and are not intended to limit the present invention.

## Claims

1. A method for controlling a torque of an engine of a hybrid vehicle, comprising:
determining a working range of the engine on the basis of a relationship between a required torque of the engine of a hybrid vehicle and a preset parameter, the preset parameter comprises a torque for an optimum efficiency of the engine and a maximum torque of the engine;
determining a working mode of a motor on the basis of the working range of the engine; and
controlling a torque of the motor on the basis of the working mode of the motor, such that the engine works by using the torque for the optimum efficiency;
wherein determining the working range of the engine on the basis of the relationship between the required torque of the engine of the hybrid vehicle and the preset parameter, comprises:
determining that the engine works in a first working range in response to that the required torque of the engine is less than the torque for the optimum efficiency of the engine, which is provided by an optimum efficiency curve of the engine;
determining that the engine works in a middle working range in response to that the required torque of the engine is larger than the torque for the optimum efficiency of the engine and less than the maximum torque of the engine, wherein the maximum torque of the engine is provided by a maximum torque curve of the engine; and
determining that the engine works in a fourth working range in response to that the required torque of the engine is larger than the maximum torque of the engine; wherein the preset parameters further comprise:
an engine torque with an air excess coefficient as a preset value, where the air excess coefficient is a ratio of an actual air consumption to a theoretical air consumption;
**characterized in that** the middle working range comprises a second working range and a third working range, and determining that the engine works in the middle working range comprises:
determining that the engine works in the second working range in response to that the required torque of the engine is larger than the torque for the optimum efficiency of the engine and less than a relatively small torque value, wherein the relatively small torque value is a relatively small value of the engine torque with the air excess coefficient as the preset value and the torque for the optimum efficiency of the engine and a compensation value, and the air excess coefficient is provided by a curve of an air excess coefficient of the engine; and
determining that the engine works in the third working range in response to that the required torque of the engine is larger than the relatively small torque value and less than the maximum torque of the engine.

2. The method according to claim 1, wherein the engine torque with the air excess coefficient as the preset value comprises:
an engine torque with the air excess coefficient of 1.

3. The method according to claim 1, wherein determining the working mode of the motor on the basis of the working range of the engine comprises:
determining that the motor works in an efficient charging mode in response to the engine working in a first working range;
determining that the motor works in a conventional charging mode in response to the engine working in a second working range;
determining that the motor works in an alternative assisting mode in response to the engine working in a third working range; and
determining that the motor works in an additional assisting mode in response to the engine working in a fourth working range.

4. The method according to claim 3, wherein controlling the torque of the motor on the basis of the working mode of the motor such that the engine works by using the torque for the optimum efficiency, comprises:
driving the motor to generate power through the engine and controlling a power generation torque of the motor to be equal to the required torque of the engine minus the torque for the optimum efficiency of the engine at a current rotational speed in response to the motor working in the efficient charging mode;
driving the motor to generate power through the engine and controlling the power generation torque of the motor to be equal to the torque required by consumption of high-voltage accessories of the whole vehicle in response to the motor working in the conventional charging mode;
assisting the engine in driving through the motor and controlling an assisting torque of the motor to be equal to the required torque of the engine minus the torque for the optimum efficiency of the engine at the current rotational speed in response to the motor working in the alternative assisting mode; and
assisting the engine in driving through the motor and controlling the motor torque to be equal to the required torque of the whole vehicle minus the maximum torque of the engine in response to the motor working in the additional assisting mode.

5. A torque control apparatus of an engine of a hybrid vehicle, comprising:
an engine working range determination module (100) for determining a working range of the engine on the basis of a relationship between a required torque of the engine of the hybrid vehicle and a preset parameter, wherein the preset parameter comprises a torque for an optimum efficiency of the engine and a maximum torque of the engine;
a motor working mode determination module (200) for determining a working mode of a motor on the basis of the working range of the engine; and
a motor control module (300) for controlling the torque of the motor on the basis of the working mode of the motor, such that the engine works by using the torque for the optimum efficiency;
wherein the engine working range determination module comprises:
a first working range determination module (110) for determining that the engine works in a first working range in response to that the required torque of the engine is less than the torque for the optimum efficiency of the engine, wherein the torque for the optimum efficiency of the engine is provided by an optimum efficiency curve of the engine;
a middle working range determination module for determining that the engine works in a middle working range in response to that the required torque of the engine is larger than the torque for the optimum efficiency of the engine and less than the maximum torque of the engine, wherein the maximum torque of the engine is provided by a maximum torque curve of the engine; and
a fourth working range determination module (140) for determining that the engine works in a fourth working range in response to that the required torque of the engine is larger than the maximum torque of the engine;
wherein the preset parameters further comprise:
an engine torque with an air excess coefficient as a preset value, where the air excess coefficient is a ratio of an actual air consumption to a theoretical air consumption;
**characterized in that** the middle working range comprises a second working range and a third working range, and the middle working range determination module comprises:
a second working range determination module (120) for determining that the engine works in the second working range in response to that the required torque of the engine is larger than the torque for the optimum efficiency of the engine and less than a relatively small torque value, wherein the relatively small torque value is a relatively small value of the engine torque with the air excess coefficient as the preset value and the sum of the torque for the optimum efficiency of the engine and a compensation value, and the air excess coefficient is provided by the curve of the air excess coefficient of the engine; and
a third working range determination module (130) for determining that the engine works in the third working range in response to that the required torque of the engine is larger than the relatively small torque value and less than the maximum torque of the engine.

6. The apparatus according to claim 5, wherein the engine torque with the air excess coefficient as the preset value comprises:
an engine torque with the air excess coefficient of 1.

7. The apparatus according to claim 5,
wherein the motor working mode determination module (200) comprises:
an efficient charging mode determination module (210) for determining that the motor works in an efficient charging mode in response to the engine working in the first working range;
a conventional charging mode determination module (220) for determining that the motor works in a conventional charging mode in response to the engine working in the second working range;
an alternative assisting mode determination module (230) for determining that the motor works in an alternative assisting mode in response to the engine working in the third working range; and
an additional assisting mode determination module (240) for determining that the motor works in an additional assisting mode in response to the engine working in the fourth working range.

## Patentansprüche

1. Verfahren zur Steuerung eines Drehmoments eines Motors eines Hybridfahrzeugs, mit den folgenden Schritten:
Bestimmen eines Arbeitsbereichs des Motors auf der Grundlage einer Beziehung zwischen einem erforderlichen Drehmoment des Motors eines Hybridfahrzeugs und einem voreingestellten Parameter, wobei der voreingestellte Parameter ein Drehmoment für einen optimalen Wirkungsgrad des Motors und ein maximales Drehmoment des Motors umfasst;
Bestimmen einer Betriebsart eines Elektromotors auf der Grundlage des Arbeitsbereichs des Motors; und
Steuern eines Elektromotordrehmoments auf der Grundlage der Betriebsart des Elektromotors, so dass der Motor unter Nutzung des Drehmoments mit optimalem Wirkungsgrad arbeitet;
wobei das Bestimmen des Arbeitsbereichs des Motors auf der Grundlage der Beziehung zwischen dem erforderlichen Drehmoment des Motors des Hybridfahrzeugs und dem voreingestellten Parameter die folgenden Schritte umfasst:
Feststellen, dass der Motor in einem ersten Arbeitsbereich arbeitet, wenn das erforderliche Drehmoment des Motors geringer ist als das Drehmoment für den optimalen Wirkungsgrad des Motors, der durch eine Kurve des optimalen Wirkungsgrads des Motors angegeben ist;
Feststellen, dass der Motor in einem mittleren Arbeitsbereich arbeitet, in Reaktion darauf, dass das erforderliche Drehmoment des Motors größer als das Drehmoment für den optimalen Wirkungsgrad des Motors und geringer als das maximale Drehmoment des Motors ist, wobei das maximale Drehmoment des Motors durch eine Kurve des maximalen Drehmoments des Motors angegeben ist;
Feststellen, dass der Motor in einem vierten Arbeitsbereich arbeitet, in Reaktion darauf, dass das erforderliche Drehmoment des Motors größer als das maximale Drehmoment des Motors ist; wobei die voreingestellten Parameter ferner aufweisen:
ein Motordrehmoment mit einem Luftüberschusskoeffizienten als voreingestelltem Wert, wobei der Luftüberschusskoeffizient ein Verhältnis eines tatsächlichen Luftverbrauchs zu einem theoretischen Luftverbrauch ist;
**dadurch gekennzeichnet, dass** der mittlere Arbeitsbereich einen zweiten Arbeitsbereich und einen dritten Arbeitsbereich umfasst, und das Feststellen, dass der Motor im mittleren Arbeitsbereich arbeitet, die folgenden Schritte umfasst:
Feststellen, dass der Motor in dem zweiten Arbeitsbereich arbeitet, in Reaktion darauf, dass das erforderliche Drehmoment des Motors größer als das Drehmoment für den optimalen Wirkungsgrad des Motors und kleiner als ein relativ kleiner Drehmomentwert ist, wobei der relativ kleine Drehmomentwert ein relativ kleiner Wert des Motordrehmoments mit dem Luftüberschusskoeffizienten als dem voreingestellten Wert und dem Drehmoment für den optimalen Wirkungsgrad des Motors und einem Kompensationswert ist, und der Luftüberschusskoeffizient durch eine Kurve eines Luftüberschusskoeffizienten des Motors bereitgestellt wird; und
Feststellen, dass der Motor in dem dritten Arbeitsbereich arbeitet, in Reaktion darauf, dass das erforderliche Drehmoment des Motors größer als der relativ kleine Drehmomentwert und geringer als das maximale Drehmoment des Motors ist.

2. Verfahren nach Anspruch 1, wobei das Motordrehmoment mit dem Luftüberschusskoeffizienten als voreingestelltem Wert umfasst:
ein Motordrehmoment mit einem Luftüberschusskoeffizienten von 1.

3. Verfahren nach Anspruch 1, wobei die Bestimmung des Arbeitsmodus des Elektromotors auf der Grundlage des Arbeitsbereichs des Motors die folgenden Schritte umfasst:
Feststellen, dass der Elektromotor in einem effizienten Lademodus arbeitet, in Reaktion darauf, dass der Motor in einem ersten Arbeitsbereich arbeitet;
Feststellen, dass der Elektromotor in einem herkömmlichen Lademodus arbeitet, in Reaktion darauf, dass der Motor in einem zweiten Arbeitsbereich arbeitet;
Feststellen, dass der Elektromotor in einem alternativen Unterstützungsmodus arbeitet, in Reaktion darauf, dass der Motor in einem dritten Arbeitsbereich arbeitet; und
Feststellen, dass der Elektromotor in einem zusätzlichen Unterstützungsmodus arbeitet, in Reaktion darauf, dass der Motor in einem vierten Arbeitsbereich arbeitet.

4. Verfahren nach Anspruch 3, bei welchem das Steuern eines Elektromotordrehmoments auf der Grundlage der Betriebsart des Elektromotors, so dass der Motor unter Nutzung des Drehmoments mit optimalem Wirkungsgrad arbeitet, die folgenden Schritte aufweist;
Antreiben des Elektromotors zur Leistungserzeugung durch den Motor und Steuern eines Leistungserzeugungsdrehmoments des Elektromotors so, dass es gleich dem erforderlichen Drehmoment des Motors abzüglich des Drehmoments für den optimalen Wirkungsgrad des Motors bei einer aktuellen Drehzahl ist, wenn der Elektromotor im effizienten Lademodus arbeitet;
Antreiben des Elektromotors zur Leistungserzeugung durch den Motor und Steuern des Leistungserzeugungsdrehmoments des Elektromotors so, dass es gleich dem Drehmoment ist, das durch den Verbrauch von Hochspannungsaccessoires des gesamten Fahrzeugs erforderlich ist, wenn der Elektromotor im herkömmlichen Lademodus arbeitet;
Unterstützen des Motors beim Antrieb durch den Elektromotor und Steuern eines Unterstützungsdrehmoments des Elektromotors so, dass es gleich dem erforderlichen Drehmoment des Motors abzüglich des Drehmoments für den optimalen Wirkungsgrad des Motors bei der aktuellen Drehzahl ist, wenn der Elektromotor im alternativen Unterstützungsmodus arbeitet;
Unterstützen des Motors beim Antrieb durch den Elektromotor und Steuern des Elektromotordrehmoments so, dass es gleich dem erforderlichen Drehmoment des gesamten Fahrzeugs abzüglich des maximalen Drehmoments des Motors ist, wenn der Elektromotor im zusätzlichen Unterstützungsmodus arbeitet.

5. Drehmomentsteuervorrichtung eines Motors eines Hybridfahrzeugs, mit:
einem Motorarbeitsbereichbestimmungsmodul (100) zum Bestimmen eines Arbeitsbereichs des Motors auf der Grundlage einer Beziehung zwischen einem erforderlichen Drehmoment des Motors des Hybridfahrzeugs und einem voreingestellten Parameter, wobei der voreingestellte Parameter ein Drehmoment für einen optimalen Wirkungsgrad des Motors und ein maximales Drehmoment des Motors umfasst;
einem Elektromotorbetriebsartbestimmungsmodul (200) zum Bestimmen einer Betriebsart eines Elektromotors auf der Grundlage des Arbeitsbereichs des Motors; und
einem Elektromotorsteuermodul (300) zum Steuern des Elektromotordrehmoments auf der Grundlage der Betriebsart des Elektromotors, so dass der Motor unter Nutzung des Drehmoments mit optimalem Wirkungsgrad arbeitet;
wobei das Motorarbeitsbereichbestimmungsmodul umfasst:
ein Modul (110) zum Bestimmen des ersten Arbeitsbereichs zum Feststellen, dass der Motor in einem ersten Arbeitsbereich arbeitet, wenn das erforderliche Drehmoment des Motors geringer ist als das Drehmoment für den optimalen Wirkungsgrad des Motors, wobei das Drehmoment für den optimalen Wirkungsgrad des Motors durch eine Kurve des optimalen Wirkungsgrads des Motors angegeben ist;
ein Modul zum Bestimmen des mittleren Arbeitsbereichs zum Feststellen, dass der Motor in einem mittleren Arbeitsbereich arbeitet, wenn das erforderliche Drehmoment des Motors größer als das Drehmoment für den optimalen Wirkungsgrad des Motors und geringer als das maximale Drehmoment des Motors ist, wobei das maximale Drehmoment des Motors durch eine Kurve des maximalen Drehmoments des Motors angegeben ist; und
ein Modul (140) zum Bestimmen des vierten Arbeitsbereichs zum Feststellen, dass der Motor in einem vierten Arbeitsbereich arbeitet, wenn das erforderliche Drehmoment des Motors größer als das maximale Drehmoment des Motors ist;
wobei die voreingestellten Parameter ferner aufweisen:
ein Motordrehmoment mit einem Luftüberschusskoeffizienten als voreingestelltem Wert, wobei der Luftüberschusskoeffizient ein Verhältnis eines tatsächlichen Luftverbrauchs zu einem theoretischen Luftverbrauch ist;
**dadurch gekennzeichnet, dass** der mittlere Arbeitsbereich einen zweiten Arbeitsbereich und einen dritten Arbeitsbereich umfasst, und das Modul zum Bestimmen des mittleren Arbeitsbereichs aufweist:
ein Modul (120) zum Bestimmen des zweiten Arbeitsbereichs zum Feststellen, dass der Motor in dem zweiten Arbeitsbereich arbeitet, in Reaktion darauf, dass das erforderliche Drehmoment des Motors größer als das Drehmoment für den optimalen Wirkungsgrad des Motors und kleiner als ein relativ kleiner Drehmomentwert ist, wobei der relativ kleine Drehmomentwert ein relativ kleiner Wert des Motordrehmoments mit dem Luftüberschusskoeffizienten als dem voreingestellten Wert und die Summe des Drehmoments für den optimalen Wirkungsgrad des Motors und einem Kompensationswert ist, und der Luftüberschusskoeffizient durch die Kurve des Luftüberschusskoeffizienten des Motors bereitgestellt wird; und
ein Modul (130) zum Bestimmen des dritten Arbeitsbereichs zum Feststellen, dass der Motor in dem dritten Arbeitsbereich arbeitet, wenn das erforderliche Drehmoment des Motors größer als der relativ kleine Drehmomentwert und geringer als das maximale Drehmoment des Motors ist.

6. Vorrichtung nach Anspruch 5, wobei das Motordrehmoment mit dem Luftüberschusskoeffizienten als voreingestelltem Wert umfasst:
ein Motordrehmoment mit einem Luftüberschusskoeffizienten von 1.

7. Vorrichtung nach Anspruch 5, wobei Elektromotorbetriebsartbestimmungsmodul (200) aufweist:
ein Modul (210) zum Bestimmen eines effizienten Lademodus zum Feststellen, dass der Elektromotor in einem effizienten Lademodus arbeitet, wenn der Motor in dem ersten Arbeitsbereich arbeitet;
ein Modul (220) zum Bestimmen eines herkömmlichen Lademodus zum Feststellen, dass der Elektromotor in einem herkömmlichen Lademodus arbeitet, wenn der Motor in dem zweiten Arbeitsbereich arbeitet;
ein Modul (230) zum Bestimmen des alternativen Unterstützungsmodus zum Feststellen, dass der Elektromotor in einem alternativen Unterstützungsmodus arbeitet, wenn der Motor in dem dritten Arbeitsbereich arbeitet; und
ein Modul (240) zum Bestimmen des zusätzlichen Unterstützungsmodus zum Feststellen, dass der Elektromotor in einem zusätzlichen Unterstützungsmodus arbeitet, wenn der Motor in dem vierten Arbeitsbereich arbeitet.

## Revendications

1. Procédé de régulation d'un couple d'un moteur thermique d'un véhicule hybride, comprenant:
la détermination d'une plage de fonctionnement du moteur thermique sur la base d'une relation entre un couple requis du moteur thermique d'un véhicule hybride et un paramètre prédéfini, le paramètre prédéfini comprend un couple pour un rendement optimal du moteur thermique et un couple maximal du moteur thermique;
la détermination d'un mode de fonctionnement d'un moteur électrique sur la base de la plage de fonctionnement du moteur thermique; et
la régulation d'un couple du moteur électrique sur la base du mode de fonctionnement du moteur électrique, de sorte que le moteur thermique fonctionne en utilisant le couple pour le rendement optimal;
dans lequel la détermination de la plage de fonctionnement du moteur thermique sur la base de la relation entre le couple requis du moteur thermique du véhicule hybride et le paramètre prédéfini comprend:
la détermination que le moteur thermique fonctionne dans une première plage de fonctionnement en réponse à ce que le couple requis du moteur thermique est inférieur au couple pour le rendement optimal du moteur thermique, qui est fourni par une courbe de rendement optimal du moteur thermique;
la détermination que le moteur thermique fonctionne dans une plage de fonctionnement intermédiaire en réponse à ce que le couple requis du moteur thermique est supérieur au couple pour le rendement optimal du moteur thermique et inférieur au couple maximal du moteur thermique, dans lequel le couple maximal du moteur thermique est fourni par une courbe de couple maximal du moteur thermique; et
la détermination que le moteur thermique fonctionne dans une quatrième plage de fonctionnement en réponse à ce que le couple requis du moteur thermique est supérieur au couple maximal du moteur thermique; dans lequel les paramètres prédéfinis comprennent en outre:
un couple de moteur thermique avec un coefficient d'excès d'air comme valeur prédéfinie, dans lequel le coefficient d'excès d'air est un rapport d'une consommation d'air réelle à une consommation d'air théorique;
**caractérisé en ce que** la plage de fonctionnement intermédiaire comprend une deuxième plage de fonctionnement et une troisième plage de fonctionnement, et la détermination de ce que le moteur thermique fonctionne dans la plage de fonctionnement intermédiaire comprend:
la détermination que le moteur thermique fonctionne dans la deuxième plage de fonctionnement en réponse à ce que le couple requis du moteur thermique est supérieur au couple pour le rendement optimal du moteur thermique et inférieur à une valeur de couple relativement faible, dans lequel la valeur de couple relativement faible est une valeur relativement faible du couple de moteur thermique avec le coefficient d'excès d'air comme valeur prédéfinie et le couple pour le rendement optimal du moteur thermique et une valeur de compensation, et le coefficient d'excès d'air est fourni par une courbe d'un coefficient d'excès d'air du moteur thermique; et
la détermination que le moteur thermique fonctionne dans la troisième plage de fonctionnement en réponse à ce que le couple requis du moteur thermique est supérieur à la valeur de couple relativement faible et inférieur au couple maximal du moteur thermique.

2. Procédé selon la revendication 1, dans lequel le couple de moteur thermique avec le coefficient d'excès d'air comme valeur prédéfinie comprend:
un couple de moteur thermique avec le coefficient d'excès d'air de 1.

3. Procédé selon la revendication 1, dans lequel la détermination du mode de fonctionnement du moteur électrique sur la base de la plage de fonctionnement du moteur thermique comprend:
la détermination que le moteur électrique fonctionne dans un mode de charge efficace en réponse à ce que le moteur thermique fonctionne dans une première plage de fonctionnement;
la détermination que le moteur électrique fonctionne dans un mode de charge conventionnel en réponse à ce que le moteur thermique fonctionne dans une deuxième plage de fonctionnement;
la détermination que le moteur électrique fonctionne dans un mode d'assistance alternatif en réponse à ce que le moteur thermique fonctionne dans une troisième plage de fonctionnement; et
la détermination que le moteur électrique fonctionne dans un mode d'assistance supplémentaire en réponse à ce que le moteur thermique fonctionne dans une quatrième plage de fonctionnement.

4. Procédé selon la revendication 3,
dans lequel la régulation du couple du moteur électrique sur la base du mode de fonctionnement du moteur électrique de sorte que le moteur thermique fonctionne en utilisant le couple pour le rendement optimal, comprend:
l'entraînement du moteur électrique pour produire de l'énergie par l'intermédiaire du moteur thermique et la régulation d'un couple de production d'énergie du moteur électrique pour qu'il soit égal au couple requis du moteur thermique moins le couple pour le rendement optimal du moteur thermique à une vitesse de rotation actuelle en réponse à ce que le moteur électrique fonctionne dans le mode de charge efficace;
l'entraînement du moteur électrique pour produire de l'énergie par l'intermédiaire du moteur thermique et la régulation du couple de production d'énergie du moteur électrique pour qu'il soit égal au couple requis par la consommation des accessoires haute tension de l'ensemble du véhicule en réponse à ce que le moteur électrique fonctionne dans le mode de charge conventionnel;
l'assistance du moteur thermique dans l'entraînement par l'intermédiaire du moteur électrique et la régulation d'un couple d'assistance du moteur électrique pour qu'il soit égal au couple requis du moteur thermique moins le couple pour le rendement optimal du moteur thermique à la vitesse de rotation actuelle en réponse à ce que le moteur électrique fonctionne dans le mode d'assistance alternatif; et
l'assistance du moteur thermique dans l'entraînement par l'intermédiaire du moteur électrique et la régulation du couple de moteur électrique pour qu'il soit égal au couple requis de l'ensemble du véhicule moins le couple maximal du moteur thermique en réponse à ce que le moteur électrique fonctionne dans le mode d'assistance supplémentaire.

5. Appareil de régulation de couple d'un moteur thermique d'un véhicule hybride, comprenant:
un module de détermination de plage de fonctionnement de moteur thermique (100) pour déterminer une plage de fonctionnement du moteur thermique sur la base d'une relation entre un couple requis du moteur thermique du véhicule hybride et un paramètre prédéfini, dans lequel le paramètre prédéfini comprend un couple pour un rendement optimal du moteur thermique et un couple maximal du moteur thermique;
un module de détermination de mode de fonctionnement de moteur électrique (200) pour déterminer un mode de fonctionnement d'un moteur électrique sur la base de la plage de fonctionnement du moteur thermique; et
un module de régulation de moteur électrique (300) pour réguler le couple du moteur électrique sur la base du mode de fonctionnement du moteur électrique, de sorte que le moteur thermique fonctionne en utilisant le couple pour le rendement optimal;
dans lequel le module de détermination de plage de fonctionnement de moteur thermique comprend:
un module de détermination de première plage de fonctionnement (110) pour déterminer que le moteur thermique fonctionne dans une première plage de fonctionnement en réponse à ce que le couple requis du moteur thermique est inférieur au couple pour le rendement optimal du moteur thermique, dans lequel le couple pour le rendement optimal du moteur thermique est fourni par une courbe de rendement optimal du moteur thermique;
un module de détermination de plage de fonctionnement intermédiaire pour déterminer que le moteur thermique fonctionne dans une plage de fonctionnement intermédiaire en réponse à ce que le couple requis du moteur thermique est supérieur au couple pour le rendement optimal du moteur thermique et inférieur au couple maximal du moteur thermique, dans lequel le couple maximal du moteur thermique est fourni par une courbe de couple maximal du moteur thermique; et
un module de détermination de quatrième plage de fonctionnement (140) pour déterminer que le moteur thermique fonctionne dans une quatrième plage de fonctionnement en réponse à ce que le couple requis du moteur thermique est supérieur au couple maximal du moteur thermique;
dans lequel les paramètres prédéfinis comprennent en outre:
un couple de moteur thermique avec un coefficient d'excès d'air comme valeur prédéfinie, dans lequel le coefficient d'excès d'air est un rapport d'une consommation d'air réelle à une consommation d'air théorique;
**caractérisé en ce que** la plage de fonctionnement intermédiaire comprend une deuxième plage de fonctionnement et une troisième plage de fonctionnement, et le module de détermination de plage de fonctionnement intermédiaire comprend:
un module de détermination de deuxième plage de fonctionnement (120) pour déterminer que le moteur thermique fonctionne dans la deuxième plage de fonctionnement en réponse à ce que le couple requis du moteur thermique est supérieur au couple pour le rendement optimal du moteur thermique et inférieur à une valeur de couple relativement faible, dans lequel la valeur de couple relativement faible est une valeur relativement faible du couple de moteur thermique avec le coefficient d'excès d'air comme valeur prédéfinie et la somme du couple pour le rendement optimal du moteur thermique et une valeur de compensation, et le coefficient d'excès d'air est fourni par la courbe du coefficient d'excès d'air du moteur thermique; et
un module de détermination de troisième plage de fonctionnement (130) pour déterminer que le moteur thermique fonctionne dans la troisième plage de fonctionnement en réponse à ce que le couple requis du moteur thermique est supérieur à la valeur de couple relativement faible et inférieur au couple maximal du moteur thermique.

6. Appareil selon la revendication 5,
dans lequel le couple de moteur thermique avec le coefficient d'excès d'air comme valeur prédéfinie comprend:
un couple de moteur thermique avec le coefficient d'excès d'air de 1.

7. Appareil selon la revendication 5,
dans lequel le module de détermination de mode de fonctionnement de moteur électrique (200) comprend:
un module de détermination de mode de charge efficace (210) pour déterminer que le moteur électrique fonctionne dans un mode de charge efficace en réponse à ce que le moteur thermique fonctionne dans la première plage de fonctionnement;
un module de détermination de mode de charge conventionnel (220) pour déterminer que le moteur électrique fonctionne dans un mode de charge conventionnel en réponse à ce que le moteur thermique fonctionne dans la deuxième plage de fonctionnement;
un module de détermination de mode d'assistance alternatif (230) pour déterminer que le moteur électrique fonctionne dans un mode d'assistance alternatif en réponse à ce que le moteur thermique fonctionne dans la troisième plage de fonctionnement; et
un module de détermination de mode d'assistance supplémentaire (240) pour déterminer que le moteur électrique fonctionne dans un mode d'assistance supplémentaire en réponse à ce que le moteur thermique fonctionne dans la quatrième plage de fonctionnement.
